# EUROPEAN PATENT SPECIFICATION

(11) **EP 2 708 395 B1**
(45) Date of publication and mention of the grant of the patent: **08.07.2015**
(21) Application number: 13184574.5
(22) Date of filing: 16.09.2013
(51) Int. Cl.: B60J 5/06

(54) **Attachment system for a tarpaulin**
Befestigungseinrichtung für eine Plane
Système de fixation pour une bâche

(30) Priority: 17.09.2012 BE 201200613
(43) Date of publication of application: 19.03.2014
(73) Proprietor: Versus-Invest, 3660 Opglabbeek (BE)
(72) Inventor: Rogiers, Erik Ronny Felix, 3850 Kozen (BE)
(74) Representative: Philippaerts, Yannick

(56) References cited:
- EP-A1- 2 371 595
- WO-A1-2009/003218
- DE-U1- 9 417 255

## Description

The invention relates to a system for suspending a tarpaulin for the purpose of closing a side of a loading space. Such suspension systems typically comprise a support beam provided with rails in which wheels of carriages can roll. The tarpaulin is suspended from these carriages.

Loading spaces enclosed by load containers, in particular mobile load containers situated on trucks and/or trains, must comply with predetermined maximum outer dimensions. These outer dimensions are often imposed by law. These prescribed maximum dimensions limit the loading space, this being the space effectively available inside the load container. Sides of such loading spaces are often closed off with a tarpaulin which can be slid open in order to thus provide access to the loading space via the relevant side. In order to obtain maximum loading space the tarpaulin is attached to an outermost peripheral edge of the load container.

The tarpaulin is typically suspended from carriages which can roll over tracks in rails present in a support beam. The carriages bear the tarpaulin and are themselves supported by the support beam. The carriages allow sliding open of the tarpaulin by rolling the carriages over the rails to one end of the support beam in the longitudinal direction of the support beam. When the tarpaulin is opened the wheels roll over the tracks in the rails, whereby the resistance to opening of the tarpaulin is minimized. A drawback of the known suspension system for tarpaulins is that in practice the carriages can jam when the tarpaulin is slid open. The known wheels frequently jam particularly when an operator attempts to slide the tarpaulin open too quickly or too roughly.

When a container with a closing tarpaulin has to be loaded or unloaded in a logistics environment, the time pressure is often very considerable, whereby these closing tarpaulins are substantially always opened quickly and roughly. Another example is when a truck, provided with a container with a side wall closed by a tarpaulin suspended via a suspension system, wholly or partially blocks a street in order to make a delivery to or pick something up from a shop, for instance in a city centre, and the tarpaulin will also be substantially always opened roughly and quickly.

Document EP 237 1 595 A1 discloses the preamble of claim 1.

It is an object of the invention to provide a suspension system which is less likely to jam when the tarpaulin is opened roughly and/or quickly.

The invention provides for this purpose a system for attaching a tarpaulin for the purpose of closing a side of a loading space, which suspension system comprises a support beam which is provided with at least two rails which are placed substantially parallel to each other and extend in a longitudinal direction, the system comprising carriages provided for attachment of said tarpaulin thereto, which carriages are further each provided with a set of wheels which are all placed so as to roll in said longitudinal direction and in the at least two rails, wherein a first subset comprises three wheels which are placed so as to roll around parallel axes extending in a first direction, wherein a second subset comprises two wheels which are placed so as to roll around parallel axes extending in a second direction lying at an angle to the first direction, wherein the wheels of the second subset are placed such that the distance between the axes of the two wheels in the longitudinal direction is greater than the average diameter of the two wheels, wherein the wheels of the first subset are placed such that two wheels of the first subset have a distance between their axes in the longitudinal direction which is greater than their average diameter, and wherein a third wheel of the first subset of wheels is placed a distance in said first direction from at least one of said two wheels of the first subset, wherein said wheels of the second subset and said third wheel of the first subset are provided so as to roll in a first of the two rails, and said two wheels of the first subset are provided so as to roll in a second of the two rails.

The carriages according to the invention comprise a plurality of subsets of wheels. A first subset comprises three wheels and a second subset comprises two wheels. All wheels run in the longitudinal direction of the support beam and thereby enhance sliding open of the tarpaulin. In the second subset the two wheels are placed spaced part in the longitudinal direction. A rotation of the carriage around the axis of the wheels of the second subset is hereby prevented. This is because, owing to the distance between the two wheels, the second wheel is moved upward or downward when the first wheel rotates around the axis. Because this second wheel also rolls in a rail, it is not possible to roll this wheel upward or downward, whereby the rotation is halted. A torque on the carriage around an axis extending in the second direction can hereby be countered by the carriage, more specifically by the two wheels of the second subset.

The first subset comprises two wheels spaced apart in the longitudinal direction. Similarly to the two wheels of the second subset, these two wheels can counter a torque around an axis extending in the first direction. This is because the two wheels are placed around axes extending in this first direction. A third wheel is placed at a distance in the first direction from one of the two wheels of the first subset. A rotation of the carriage around the axis in longitudinal direction is hereby prevented. This is because, owing to the distance between the two wheels in the first direction, the other wheel will displace when the carriage rotates around one of the wheels and around the axis in longitudinal direction. Displacement of this other wheel is not possible because this wheel travels in a rail. A torque around the axis in longitudinal direction can hereby be countered by the carriages. The carriages are hereby provided for the purpose of countering and preventing three different torques, and this while the wheels are loaded while countering the torque only with a force perpendicularly of their axis. Wheels are particularly suitable for countering forces perpendicularly of their axis without jamming. The carriages according to the invention hereby continue to travel smoothly in the rails, even in the case of combinations of different torsional forces.

The third wheel of the first subset is provided so as to roll in a first of the two rails, and said second wheels of the first subset are provided so as to roll in a second of the two rails. The distance between the wheels which counter a torque is hereby relatively great. A high torque can hereby be countered without exceptionally great forces occurring in the carriage.

The at least two rails preferably comprise tracks on which the wheels can roll. When the tracks are preformed and provided in the rails, wheels can easily be placed in the rail and they can roll in stable manner in the rail.

The tracks are preferably formed in opposite placed pairs with an intermediate distance greater than the diameter of the associated wheels. When the tracks are formed in pairs, the wheels can roll between two tracks, whereby the wheel, when it is pushed in one direction, rolls over the one track while the wheel, when pushed to another side, can roll over the other track. An intermediate distance greater than the diameter of the associated wheels, the associated wheels being the wheels rolling between the two tracks, ensures that at all times a wheel can make contact with only one track. The wheels cannot therefore become stuck through being jammed between tracks.

The wheel of the second subset and the third wheel of the first subset are preferably provided so as to roll in a first of the two rails, and said second wheel of a first subset is provided so as to roll in a second of the two rails. Such a placing of the wheels relative to the rails is efficient and economic, whereby manufacture and placing of the wheels is facilitated.

Said third wheel of the first subset is preferably placed between the two wheels of the second subset. Such placing provides for a symmetrical structure of the wheel, whereby the countering of one torque generates a minimum of further torques.

Said first direction is preferably substantially horizontal or vertical, more preferably.vertical. Wheels are provided particularly so as to counter a force perpendicularly of their axis. Due to the horizontal or vertical placing of the first direction the downward direction, being the direction in which the tarpaulin hangs, comes to lie perpendicularly of the axis of one of the subsets of wheels. The weight of the tarpaulin, which exerts a downward force on the carriages, can thus be supported as well as possible.

Each of the two rails preferably has an opening in the longitudinal direction adjacent to the lowest point of the rail. Providing an opening adjacent to the lowest point of the rail will enable water and dirt, which typically accumulate in lower-lying zones, to flow out of the rail via the opening. No accumulation of dirt thus occurs in rails and the tracks remain substantially free of dirt.

The at least two rails are preferably placed one above another. Placing these rails one above another provides a simple and economic solution, whereby the support beam can be manufactured and mounted in a cost-effective manner and efficiently placed manner.

Said first of the two rails is preferably placed above the second of the two rails. The second of the two rails is provided so as to allow rolling of the second wheels of the first subset, while the first of two rails is provided to allow rolling of the wheels of the second subset and the third wheel of the first subset. The second of the two rails more preferably has a reverse U-shape in cross-section. A reverse U as lower of the two rails has the advantage that no dirt or water accumulates in the rail. Splashing water or dirt caused by the truck during travel cannot remain in the rail.

The first rail preferably defines a rectangular cavity with an opening which on the one hand adjoins a lower, lying track and on the other adjoins an underside of an upright track. The first rail hereby provides a horizontal track for the wheel rotating around a horizontal axis, while the opening is maximized so that there is minimal or no dirt accumulation in the rail.

The support beam preferably comprises a third rail which is placed above the at least two rails and which is provided with a groove. Elements can be secured in this groove which can perform further functions on the rail. A rubber cover can thus be fastened on the upper side of the truck to the rail which covers and thus protects the carriages from every kind of weather. The rubber cover further forms a watertight seal for the loading space. The same groove could be used on the underside to provide a reinforcement to the support beam so that the support beam is not damaged, or is less likely to be damaged, for instance during loading with a forklift truck wherein the forklift truck strikes the support beam.

The at least two rails are preferably placed on one and the same side of the tarpaulin and at a distance therefrom when the tarpaulin is suspended from the carriages. The tarpaulin hereby hangs on the outermost peripheral edge of the container and a maximum interior space can be obtained while the maximum outer dimensions laid down by law are taken into account.

The invention will now be further described on the basis of an exemplary embodiment as shown in the drawing.

In the drawing:
figure 1 shows a trailer for a truck which can be closed via a tarpaulin;
figure 2 shows a support beam with carriage;
figures 3A, 3B and 3C each show a section of a rail with carriage;
figure 4 shows an alternative structure of a support beam with carriage;
figure 5 shows an upper support beam with carriage;
figure 6 shows a lower support beam with carriage; and
figure 7 shows a connecting element between an upper and a lower carriage.

The same or similar elements are designated in the drawing with the same reference numerals.

### Detailed description of the invention

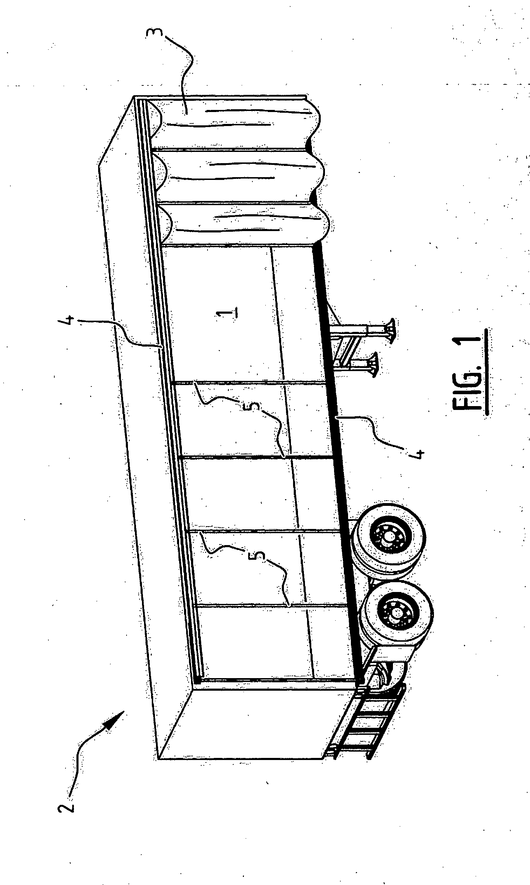

Loading spaces 1 defined by load containers 2, in particular mobile load containers, are used for transport of goods therein. Such a load container 2 is shown in figure 1 as a load container 2 with loading space 1 on a trailer for a truck (not shown). It will however be apparent that the invention is applicable not only to trailers of trucks but also to railway wagons, trucks with fixed load container and further mobile load containers with loading spaces.

Such load containers have outer dimensions typically limited by law. In Belgium for instance an outer dimension with a maximum width of 2.55 m is thus imposed for a non-refrigerated load container of a truck. These imposed maximum outer dimensions will of course affect the maximum loading space available in the load container. In order to maximize this loading space the wall of the loading space is preferably formed on an outermost peripheral edge of the load container. Bearing and support elements with which the load container is constructed and which have a cross-section larger and thicker than the wall of the loading space are therefore preferably located inside this wall so that no part, or only a small part, of these elements protrudes outside this wall. The outer dimensions are in this way defined substantially by the wall of the loading space, this maximizing the room available in the loading space.

The wall is preferably formed by a tarpaulin 3. A tarpaulin 3 typically has a small thickness, and a tarpaulin 3 will therefore be suitable as wall of a load container 2 for closing a loading space 1 since it takes up little loading space 1. A tarpaulin 3 further has the advantage that it is flexible and, provided it is attached via a suitable suspension system, can be pushed away to one side, as illustrated on the right-hand side of the trailer of figure 1, such that the loading space becomes accessible.

Figure 1 shows a trailer wherein tarpaulin 3 is suspended from a suspension system with carriages and support beams, wherein support beams 4 are located on the underside of the tarpaulin as well as on the upper side of the tarpaulin. In such a configuration as shown in figure 1 connecting elements 5 can be formed between carriages of the upper support beam and carriages of the lower support beam. The tarpaulin is then connected to these connecting elements such that the side wall of the container can be closed with the tarpaulin. The placing of an upper support beam and a lower support beam has the advantage that, both in the closed position and during opening, and both at the top and bottom, the tarpaulin cannot move away from the trailer. This is particularly important in the case of smaller trucks which are used in urban areas for loading and unloading goods. If such a truck were to be provided with only an upper support beam, wherein the tarpaulin is attached to the carriages rolling in rails of the upper support beam, the tarpaulin could move away from the trailer at the bottom and thereby damage surrounding objects (cars, buildings...) or injure people. This is prevented by also guiding the tarpaulin on the underside via a support beam with a rail and carriages. The suspension system according to the invention is particularly suitable for applications where a support beam is placed both at the top and bottom. The invention can however also be applied in configurations where a support beam is placed only on the upper side and wherein the tarpaulin is suspended from this one support beam.

When a tarpaulin suspended via a suspension system as shown in figure 1 is opened roughly or too quickly, the carriages can come to lie in a wrenched position. A connecting element can for instance be pushed open such that it is displaced further on the underside in the support beam than on the upper side, thereby causing a torque on the carriages. The connecting element can also be forced by the tarpaulin to rotate around its longitudinal axis, for instance because the tarpaulin impedes folding up because of its stiffness, so that a torsional force around an upward axis acts on the carriages. When a truck is standing partially on the pavement, for instance with the right rear wheels, the truck as a whole is under torsional stress, this torsion also having an effect on the carriages running in the rails. In prior art systems each of the above described forces which can act on the carriages tend to block the carriages and make their movement more difficult. The support beam and carriages according to the invention are provided for the purpose of countering such forces.

Figure 1 shows the trailer with tarpaulin 3 and connecting elements 5, wherein the connecting elements are shown on the left in the figure and the tarpaulin on the right. In practice the tarpaulin will however be attached against connecting elements 5 or carriages. The view of figure 1 serves only by way of illustrating the different elements in the suspension system.

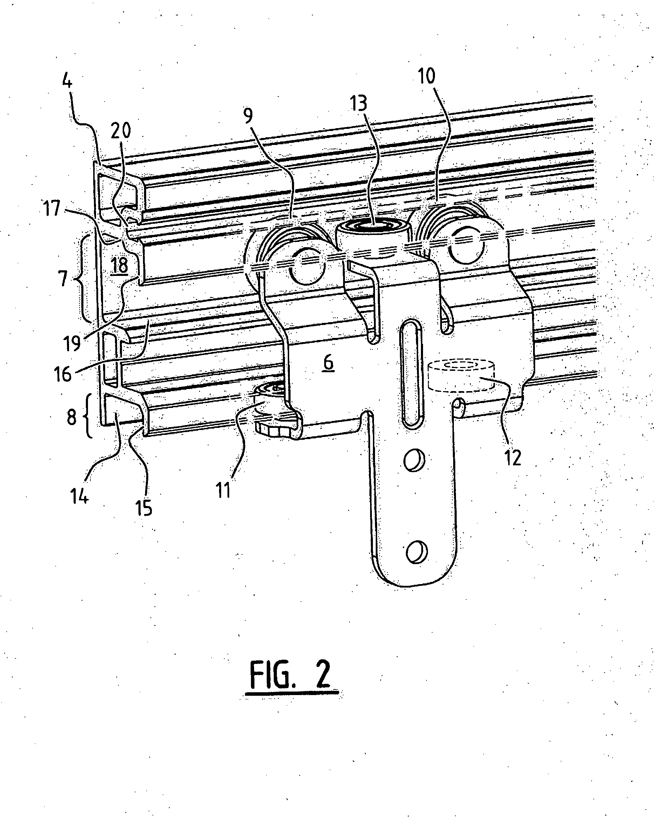

Figure 2 shows a support beam 4 and a carriage 6 of the suspension system of the invention. Support beam 4 is cut-away here on the left in order to show the structure of support beam 4. Support beam 4 is preferably an extruded profile and has a longitudinal direction. Support beam 4 can be placed at both the top and bottom of a wall in order to guide the tarpaulin via carriages, as is shown in figure 1.

Shown on the left in figure 2 is how the support beam has a first rail 7 and a second rail 8. These rails are formed such that wheels of a carriage 6 can roll in the rails in the longitudinal direction. For this purpose all wheels are placed so as to roll around axes extending in a direction parallel to the plane perpendicularly of the longitudinal direction.

Figure 2 likewise shows a carriage provided with a set of wheels. The set comprises five wheels. A first subset of wheels is placed in the carriage such that the wheels roll around axes extending in a first direction. This first subset comprises three wheels 11, 12 and 13. Wheels 11, 12 and 13 are all provided for the purpose of rolling around an upward extending axis. The upward direction of the axis around which wheels 11, 12 and 13 roll is also parallel to the plane lying perpendicularly of the longitudinal direction. Carriage 6 has a second subset of wheels with two wheels 9 and 10. Wheels 9 and 10 are provided for the purpose of rolling around parallel axes. The axes around which wheels 9 and 10 rotate preferably extend in a second direction which is lying and transverse relative to the support beam. In the context of the invention a subset is defined as a number of elements of a set.

The first subset of wheels comprises three wheels 11, 12, 13, of which the first two wheels 11 and 12 are provided for the purpose of rolling in second rail 8. Third wheel 13 of the first subset is provided for the purpose of rolling in first rail 7. Wheels 11, 12 and 13 are provided for rolling around upward extending Axes. Wheels 11, 12 and 13 are preferably connected to a frame of the carriage via an underside of the wheel. Wheels 11, 12 and 13 hereby lie higher placed than their connecting point to the frame of carriage 6. The effect hereof is that rails 7 and 8 have openings on their underside to allow the frame of the carriage to protrude outside the rail. The frame of carriage 6 connects wheels 11, 12, 13, 9, 10 to the tarpaulin which is suspended outside the support beam, and so also outside rails 7 and 8. The frame of carriages 6 therefore extends from in rail 7, 8 to outside the rail. Because the openings on rails 7 and 8 are formed on their underside, water (and dirt) can flow unimpeded to the outside. In a reverse situation, wherein an opening is formed on the upper side, a trough or gutter is formed in the rail in which water and dirt can accumulate. By placing the openings at the bottom of the rail as in the present invention the rails can be kept free of dirt and water.

The second subset comprises two wheels 9 and 10 which are provided so as to roll around parallel axes extending in a lying direction transversely of the support beam. The two wheels of the second subset are placed on either side of the third wheel of the first subset, and both roll in first rail 7. The wheels of the second subset run around axes extending in a second direction and the wheels of the first subset roll around axes extending in a first direction. The first direction and second direction preferably lie at an angle of 90° to each other. It will be apparent to the skilled person that variation from this ideal 90° is also possible without departing from the principle of the invention. The wheels are connected to the frame of carriage 6 via arms. The arms which hold the wheels of second subset 9, 10 preferably extend downward and outward from the wheel so as to thus connect the wheel in the rail to the frame of the carriage which is located outside the rails. By forming the arms in downward and outward direction an opening can be provided in the rail on the underside of the rail, whereby dirt and water can move to the outside through the opening.

Rails 7 and 8 are provided with tracks on which the wheels can roll. Second rail 8, in which the two first wheels of first subset 11 and 12 roll, is thus provided with upright tracks 14 and 15. Tracks 14 and 15 form a pair of tracks between which wheels 11 and 12 can roll. Tracks 14 and 15 of the pair of tracks have for this purpose a mutual distance greater than the diameter of wheels 11 and 12. Wheels 11 and 12 hereby fit between the tracks and it is only possible for wheels 11 and 12 to make contact with one of the tracks 14 and 15. Wheels 11 and 12 cannot therefore become jammed between tracks 14 and 15.

The wheels are preferably of substantially rectangular cross-section along their rotation axis (the rotation axis is comprised in the intersecting plane). They hereby have a substantially flat tread (the tread of the wheel is the surface which makes contact with a base surface when the wheel rolls over the base surface). The wheel is preferably manufactured substantially from metal. The track is preferably also manufactured from metal. Owing to its substantially flat tread, a wheel can roll over a flat track. Concave tracks, in which water and dirt accumulate, are hereby unnecessary. A substantially flat track is defined as a track wherein the surface curvature has a diameter which is appreciably greater than the width of the wheel. The surface curvature preferably has a diameter which is at least twice, more preferably at least three times, most preferably at least four times larger than the width of the wheel. The wheel hereby has an angle between the tread and the side surface of the wheel.

First rail 7 has four tracks. A first pair of tracks 18 and 19 extend upward in an upper segment of the first rail and are provided so as to allow rolling of the third wheel of first subset 13. For this purpose the two tracks 18 and 19, which form a pair of tracks, have a mutual distance which is greater than the diameter of the third wheel of first subset 13. The third wheel of the first subset can hereby roll between tracks 18 and 19, wherein the third wheel of first subset 13 can make contact with no more than one of the tracks simultaneously, and so cannot be jammed. First rail 7 further comprises a pair of tracks 16 and 17 which extend flat and are provided to allow rolling of the wheels of second subset 9, 10 therebetween. For this purpose the tracks 16 and 17, which form a pair, have a mutual distance greater than the diameter of the wheels of second subset 9, 10, whereby the wheels of second subset 9, 10 can roll between the pair of tracks 16, 17 and can make contact with no more than one of the tracks 16, 17. The wheels of second subset 9, 10 do not therefore become clamped between tracks 16, 17.

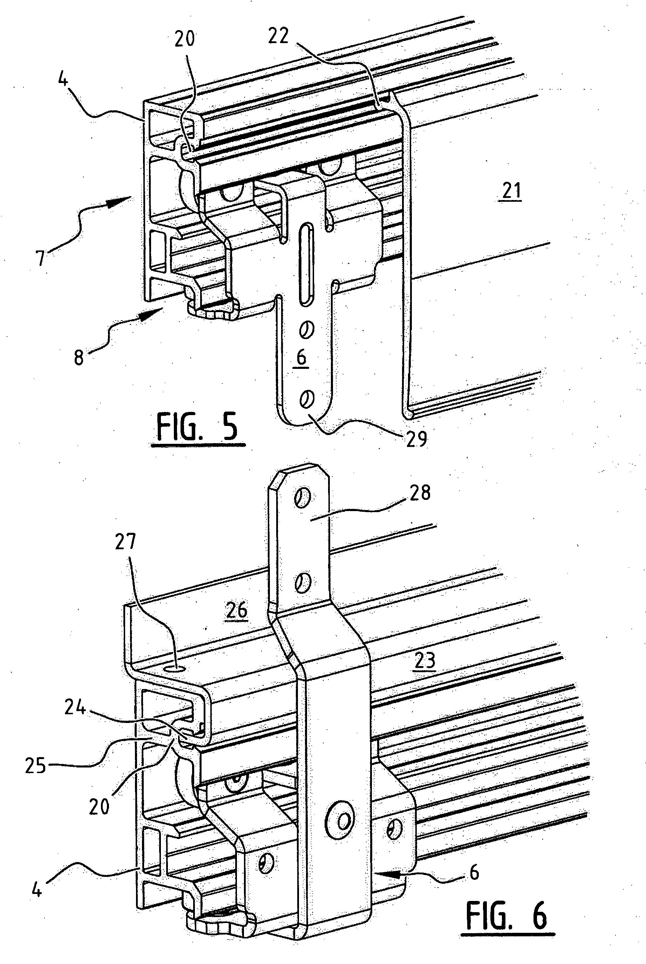

Support beam 4 in figure 2 further has a groove 20 located on an outer side of the support beam (outside relative to the container into which the support beam is incorporated) and at the top of the support beam. This groove is provided for the purpose of fulfilling several functions, as will be further discussed with reference to figures 5 and 6.

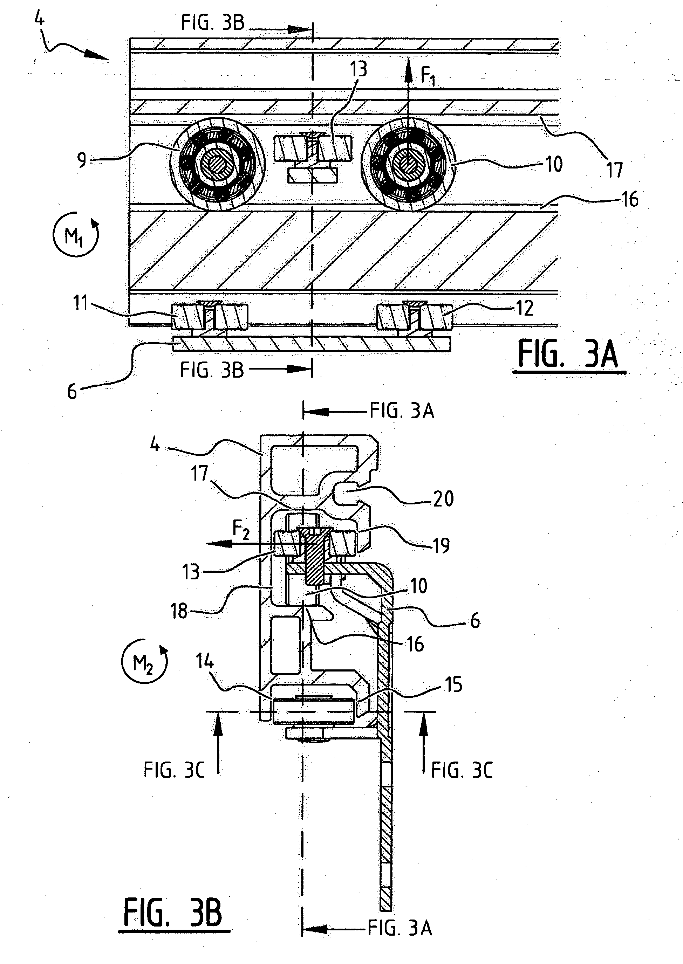

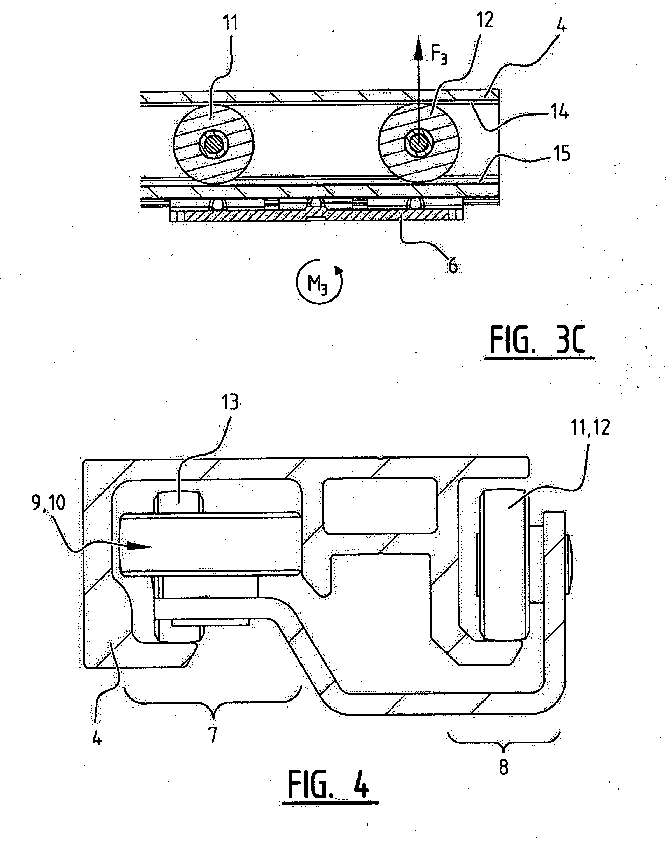

Referring to figures 3A, 3B and 3C, the effect of the specific placing of the wheels in the support beam will be explained. Each of the figures 3A, 3B and 3C shows a cross-section of the carriage along a different intersecting plane. Figures 3A, 3B and 3C thus allow the action of forces in the carriage to be described in three dimensions.

Figure 3A shows a cross-section of the support beam and the carriage along an intersecting plane defined by the longitudinal direction of the support beam and the upward direction. The intersecting plane is indicated in figure 3B. Figure 3A particularly shows wheels 9 and 10 of the second subset which roll between tracks 16 and 17. When a torque M1 is applied to the carriage at the position of wheel 9 of the second subset, wheel 10 is subjected to an upward force F1. This upward force F1 will however be countered because wheel 10 will strike against track 17. Such a torque M1 can thus be countered by wheels 9 and 10 of the second subset due to forces extending perpendicularly from the axis of the wheel in the direction of track 16 or 17. Such a force perpendicular to the axis of a wheel in the direction of a track does not create any appreciable additional rolling resistance to the wheel, since a wheel is particularly provided for countering such a force. In order to enable such a force to be countered via the wheels of the second subset, the wheels have in the longitudinal direction (in figure 3A the direction from left to right) an intermediate distance greater than the average diameter of the respective wheels 9 and 10. The intermediate distance is preferably greater than 2 centimetres, more preferably greater than 5 centimetres, more preferably greater than 7 centimetres, most preferably about 10 centimetres. As alternative embodiment a carriage could be designed wherein a wheel 9 runs in a first rail and a wheel 10 in a second rail and wherein the wheels are spaced apart in the longitudinal direction. Such a configuration is also suitable for countering a torque M1. Because wheels 9 and 10 can counter the torque M1, the other wheels 11, 12 and 13 will not be subject to any appreciable disruption from this torque. They will particularly not bump against any part of the rail, i.e. wheels 9 and 10 prevent a movement of the carriage resulting from such a torque M1.

Figure 3B shows a cross-section of a carriage and support beam along a plane extending upward and transversely relative to the support beam. The plane is indicated in figure 3A. Figure 3B shows the effect of the placing of the third wheel of first subset 13 relative to at least one of the first two wheels 11, 12 of the first subset. Third wheel 13 is displaced in the direction of the axis around which the wheels of the first subset roll. When a torque M2 is applied to the carriage at the position of wheel 12, wheel 13 is subjected to a force F2 in the transverse direction. This force F2 can be countered by the first rail, in particular track 18, and will prevent the carriage tilting as a result of the torque M2. The distance in the first direction between at least one of the wheels 11 and 12 of the first subset and the third wheel 13 of the first subset has the result that a torque M2 can be countered by the respective wheels. The distance in the first direction between at least one of the wheels 11 and 12 of the first subset and third wheel 13 of the first subset is preferably greater than 2 centimetres, more preferably greater than 5 centimetres, more preferably greater than 7 centimetres, most preferably about 10 centimetres. The forces occurring as a result of a torque M2 can be countered by the wheels via a force which extends perpendicularly from the axis of the wheel to its track. Such a force has no appreciable effect on the rolling resistance a wheel undergoes, i.e. wheels are provided particularly for the purpose of countering such a force. When a torque M2 is applied to the carriage, wheels 11, 12 and 13, because they roll between respective tracks 14 and 15 and tracks 18 and 19, prevent the carriage tilting as a result of this torque M2. The other wheels will therefore not displace appreciably, and the other wheels will not encounter any notable resistance from a torque M2.

Figure 3C shows a cross-section along a plane extending in longitudinal direction and transversely relative to the support beam. The cross-sectional plane is further indicated in figure 3B. Figure 3C shows the first two wheels of second subset 11 and 12 which run in the second rail between tracks 14 and 15 which form a pair of tracks for wheels 11 and 12. When a torque M3 is applied to the carriage at the position of wheel 11, wheel 12 will be subjected to a force F3 in the transverse direction of the support beam. This force F3 will be countered by track 14, which will prevent wheel 12 being displaced to any appreciable extent as the result of the torque M3. Similarly to figures 3A and 3B, it becomes apparent here how wheels 11 and 12 can counter a torque M3 because of their mutual distance in the longitudinal direction. The mutual distance between wheels 11 and 12 in the longitudinal direction is preferably greater than 2 centimetres, more preferably greater than 5 centimetres, more preferably greater than 7 centimetres, most preferably about 10 centimetres. When a torque M3 is applied to the carriage, wheels 11 and 12 will prevent the carriage being displaced or rotated in the rails to any appreciable extent by tracks 14 and 15. The other wheels 9, 10, 13 will hereby not undergo any appreciable displacement when a torque M3 is applied to the carriage, and the carriage will thus continue to roll smoothly in the support beam.

The combination of figures 3A, 3B and 3C make it clear that the specific structure of the carriage according to the invention has the particular effect that torques can be countered in the three directions of rotation. Torque in each of the three rotation directions is countered here in a manner which causes negligible rolling resistance in the carriages. The result is that a carriage according to the invention cannot be blocked by any single external force and prevented from rolling in the support beam. This makes a carriage according to the invention highly suitable for use in a suspension system for a tarpaulin. The wheels of first subset 11, 12 and 13 counter transverse forces which are typically considerably less great than the vertical forces countered by the wheels of second subset 9 and 10. One of the wheels of first subset 11, 12 and 13 could therefore be replaced by a slide block. When placed as the wheel would be placed, this slide block can perform the same function in the same way as the wheel, and with the same result, i.e. torques can be countered.

First rail 7 has four tracks 16, 17, 18 and 19. The rail further has an opening extending from an edge of the lower flat track 16 to a lower edge of an outer upright track 19. The opening in first rail 7 hereby extends substantially on the underside of the first rail. As a result a minimum of water and dirt accumulates in the first rail. Second rail 8 comprises upright tracks 14 and 15. The second rail further comprises an opening extending from a lower edge of a first upright track 14 to a lower edge of a second upright track 50. The second rail hereby forms a reverse U-shape in cross-section. The result is that water and dirt do not have a platform or gutter in which they can accumulate. Such arrangements of first rail and second rail differ considerably from known rails for suspending a tarpaulin for closing a loading space. Known rails have concave lower tracks, whereby a gutter is formed which can retain water and dirt. The tracks of the rails of the suspension system of the invention preferably take a flat form. A gutter in which water or dirt can accumulate is not therefore formed.

Figure 4 shows an alternative configuration of carriage and support beam according to the invention. Here the figure shows a carriage with a first subset of three wheels 11, 12, 13 which roll around a substantially lying axis. The carriage comprises a second subset of two wheels 9 and 10 which roll substantially around an upright axis. The support beam is provided here with two rails 7 and 8 extending adjacently of and parallel to each other. Similarly to the above described openings, the openings in the rails are formed such that there is a minimal possibility of dirt and water accumulating in the rails. The placing of the wheels is also such that torques can be countered in the three directions.

Figure 5 shows an upper support beam 4 with a carriage 6 which is provided with wheels which roll in rails 7 and 8. Rails 7 and 8 extend parallel to each other, wherein first rail 7 is located above second rail 8. Figure 5 shows how a carriage 6 located on the upper support beam comprises a downward extending protrusion 29 for suspending the tarpaulin from the carriage or for connecting the carriage to a connecting element 5. The figure further shows how the upper support beam 4 is provided with a shielding element 21. Shielding element 21 is provided with a connecting protrusion 22 which is compatible with groove 20 in the support beam. Shielding element 21 extends downwards from protrusion 22 in order to shield the carriages and support beam from every kind of weather and to seal the loading space watertightly on the top side.

Figure 6 shows a lower support beam 4 with carriage 6. Figure 6 shows how the lower carriage is provided with an upward extending connecting element 28 for connecting the tarpaulin or connecting element 5 to the carriage. Alternatively, the tarpaulin can be attached directly to carriage 6 of the lower support beam without connecting element 28. The figure further shows how a reinforcing element 23 is fixed to the support beam. Reinforcing element 23 preferably has a tongue 24 which extends in groove 20 in the support beam. Preferably provided in the support beam is a partition 25 which extends from groove 20 to the opposite end of the support beam. Tongue 24 of reinforcing element 23 is preferably provided so as to fit against partition 25. An impact against reinforcement 23 can hereby be transmitted via partition 25 to the chassis of the truck, and support beam 4 will suffer minimal damage from an impact. Reinforcing element 23 is preferably fixed to the support beam via fixing means 27. Reinforcing element 23 can be fixed to the support beam via screws, nails, rivets or similar fastening means. Reinforcing element 23 preferably further comprises a protruding edge 26 extending upward from the upper side of the support beam. Protruding edge 26 prevents the possibility of goods in the truck moving and sliding out of the truck.

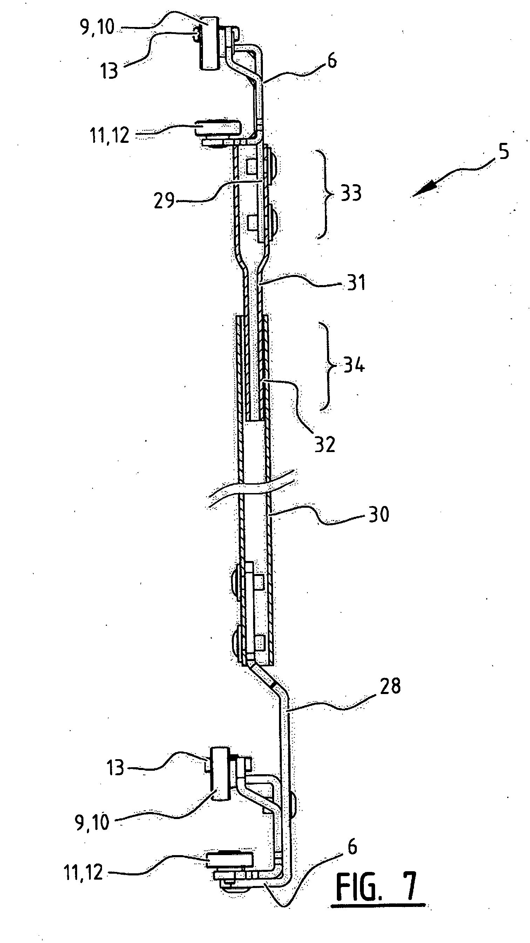

Figure 7 shows a connecting element 5 according to the invention. The figure shows a carriage 6 provided for rolling in the upper support beam (at the top of the figure) and a carriage 6 provided for rolling in the lower support beam (at the bottom of the figure). The upward protruding element 28 of the lower carriage is connected here to a lower element 30 of the connecting element via connecting means such as screws, nails or rivets. The downward extending connecting element 24 of upper carriage 6 is connected to an upper portion 31 of connecting element 5. The upper 31 and the lower 30 portion of connecting element 5 are mutually connected via a slide connection 32, wherein the one end of connecting element 5 slides in the other end. Other connecting mechanisms where a degree of freedom of movement is available are likewise possible. The connecting element has a freedom of movement here for the purpose of varying a distance between the upper wheel and the lower wheel. This is particularly suitable for countering torsional forces on the truck. The truck can also be provided with a lifting roof, wherein the roof can be raised several tens of centimetres upward in order to facilitate loading and unloading. A connecting element 5 as shown in figure 7 can follow such a movement of the roof by allowing the lower element and the upper element 31 to slide outward relative to each other (or slide inward when the roof is lowered). Figure 7 shows a connecting element wherein a slide connection 32 is positioned on the upper side of the connecting element, although it is also possible to position this slide connection 32 on the underside of the connecting element.

The tarpaulin for closing the loading space can be attached to the upper carriage 6 at the position of reference numeral 33. The tarpaulin is hereby suspended from the upper support beam. Alternatively, the tarpaulin can be attached to an upper segment 34 of lower element 30 of connecting element 5. Connecting element 5 then preferably extends to a position close to the upper support beam. The advantage of attaching the tarpaulin to the segment 34 of the connecting element is that the weight of the tarpaulin is then supported by lower carriages 6 which are mounted directly on the chassis of the truck via the lower support beam. This reduces the centre of gravity of the truck, and the superstructure of the loading space can be manufactured in lighter form.

## Claims

1. System for attaching a tarpaulin (3) for the purpose of closing a side of a loading space (1), which suspension system comprises a support beam (4) which is provided with at least two rails (7,8) which are placed substantially parallel to each other and extend in a longitudinal direction, the system comprising carriages (6) provided for attachment of said tarpaulin (3) thereto, which carriages are further each provided with a set of wheels which are all placed so as to roll in said longitudinal direction and in the at least two rails (7,8), **characterised in that** a first subset comprises three wheels (11,12,13) which are placed so as to roll around parallel axes extending in a first direction, wherein a second subset comprises two wheels (9,10) which are placed so as to roll around parallel axes extending in a second direction lying at an angle to the first direction, wherein the wheels of the second subset are placed such that the distance between the axes of the two wheels in the longitudinal direction is greater than the average diameter of the two wheels (9,10), wherein the wheels of the first subset are placed such that two wheels of the first subset have a distance between their axes in the longitudinal direction which is greater than their average diameter, and wherein a third wheel of the first subset of wheels is placed a distance in said first direction from at least one of said two wheels of the first subset, wherein said wheels of the second subset and said third wheel of the first subset are provided so as to roll in a first of the two rails (7,8), and said two wheels of the first subset are provided so as to roll in a second of the two rails (7,8).

2. Attachment system as claimed in claim 1, wherein the at least two rails (7,8) comprise tracks (14,15,16,17,18,19) on which the wheels can roll.

3. Attachment system as claimed in claim 2, wherein the tracks are formed in opposite placed pairs with an intermediate distance greater than the diameter of the associated wheels such that each wheel can roll between two tracks.

4. Attachment system as claimed in any of the foregoing claims, wherein said angle is about 90 degrees.

5. Attachment system as claimed in any of the foregoing claims, wherein said third wheel (13) of the first subset is placed between the two wheels (11,12) of the second subset.

6. Attachment system as claimed in any of the foregoing claims, wherein said first direction is substantially horizontal or vertical.

7. Attachment system as claimed in claim 6, wherein said first direction is substantially vertical.

8. Attachment system as claimed in any of the foregoing claims, wherein each of the two rails (7,8) has an opening in the longitudinal direction adjacent to a lowest point of the rail.

9. Attachment system as claimed in claim 2 or 3 and claim 8, wherein said opening is adjacent to a lowest-lying track in the rail.

10. Attachment system as claimed in any of the foregoing claims, wherein the at least two rails (7,8) are placed one above another.

11. Attachment system as claimed in claims 4 and 9, wherein said first of the two rails (7,8) is placed above the second of the two rails.

12. Attachment system as claimed in claim 11, wherein the second of the two rails (7,8) has a reverse U-shape in cross-section.

13. Attachment system as claimed in claim 11 or 12 and claim 2 or 3, wherein the first rail defines a rectangular cavity with an opening which on the one hand adjoins a lower, lying track and on the other adjoins an underside of an upright track.

14. Attachment system as claimed in any of the foregoing claims, wherein the support beam (4) further comprises a third rail which is placed above the at least two rails (7,8) and which is provided with a groove (20).

15. Attachment system as claimed in any of the foregoing claims, such that the at least two rails are located on one and the same side of the plane of the tarpaulin (3) and at a distance therefrom when the tarpaulin is suspended from the carriages (6).

## Patentansprüche

1. System zum Anbringen einer Plane (3) zum Zweck des Schließens einer Seite eines Laderaums (1), wobei das Aufhängesystem einen Trägerholm (4) aufweist, der mit zumindest zwei Schienen (7, 8) versehen ist, die im Wesentlichen parallel zueinander angeordnet sind und sich in einer Längsrichtung erstrecken, wobei das System Wagen (6) aufweist, die zum Anbringen der Plane (3) daran vorgesehen sind, wobei die Wagen ferner jeweils mit einem Satz von Rädern versehen sind, die alle so platziert sind, dass sie in der Längsrichtung rollen und in mindestens zwei Schienen (7, 8), **dadurch gekennzeichnet, dass** ein erster Teilsatz drei Räder (11, 12, 13) aufweist, die so platziert sind, dass sie um parallele Achsen drehen, die sich in einer ersten Richtung erstrecken, wobei ein zweiter Teilsatz zwei Räder (9, 10) aufweist, die so platziert sind, dass sie um parallele Achsen drehen, die sich in einer zweiten Richtung erstrecken, die in einem Winkel zur ersten Richtung liegt, wobei die Räder des zweiten Teilsatzes so angeordnet sind, dass der Abstand zwischen den Achsen der beiden Räder in der Längsrichtung größer ist als der mittlere Durchmesser der beiden Räder (9, 10), wobei die Räder des ersten Teilsatzes so platziert sind, dass zwei Räder des ersten Teilsatzes einen Abstand zwischen ihren Achsen in der Längsrichtung aufweisen, der größer ist als ihr mittlerer Durchmesser, und wobei ein drittes Rad des ersten Teilsatzes von Rädern in einem Abstand in der ersten Richtung von zumindest einem der beiden Räder des ersten Teilsatzes platziert ist, wobei die Räder des zweiten Teilsatzes und das dritte Rad des ersten Teilsatzes so vorgesehen sind, dass sie in einer ersten von zwei Schienen (7, 8) laufen und die beiden Räder des ersten Teilsatzes so vorgesehen sind, dass sie in einer zweiten der beiden Schienen (7, 8) laufen.

2. Anbringungssystem nach Anspruch 1, wobei die zumindest zwei Schienen (7, 8) Spuren (14, 15, 16, 17, 18, 19) aufweisen, auf denen die Räder rollen können.

3. Anbringungssystem nach Anspruch 2, wobei die Spuren in gegenüber platzierten Paaren mit einem Zwischenabstand ausgebildet sind, der größer ist als der Durchmesser der zugeordneten Räder, sodass jedes Rad zwischen zwei Spuren laufen kann.

4. Anbringungssystem nach einem der vorstehenden Ansprüche, wobei der Winkel etwa 90° beträgt.

5. Anbringungssystem nach einem der vorstehenden Ansprüche, wobei das dritte Rad (13) des ersten Teilsatzes zwischen den beiden Rädern (11, 12) des zweiten Teilsatzes platziert ist.

6. Anbringungssystem nach einem der vorstehenden Ansprüche, wobei die erste Richtung im Wesentlichen horizontal oder vertikal ist.

7. Anbringungssystem nach Anspruch 6, wobei die erste Richtung im Wesentlichen vertikal ist.

8. Anbringungssystem nach einem der vorstehenden Ansprüche, wobei jede der beiden Schienen (7, 8) eine Öffnung in der Längsrichtung angrenzend an einen niedrigsten Punkt der Schiene aufweist.

9. Anbringungssystem nach Anspruch 2 oder 3 und Anspruch 8, wobei die Öffnung angrenzend an eine niedrigst liegende Spur in der Schiene ist.

10. Anbringungssystem nach einem der vorstehenden Ansprüche, wobei die mindestens zwei Schienen (7, 8) übereinander angeordnet sind.

11. Anbringungssystem nach Anspruch 4 und 9, wobei die erste der beiden Schienen (7, 8) oberhalb der zweiten der beiden Schienen angeordnet ist.

12. Anbringungssystem nach Anspruch 11, wobei die zweite der beiden Schienen (7, 8) eine umgekehrte U-Form im Querschnitt aufweist.

13. Anbringungssystem nach Anspruch 11 oder 12 und Anspruch 2 oder 3, wobei die erste Schiene einen rechtwinkligen Hohlraum mit einer Öffnung definiert, die sich einerseits an eine tieferliegende Spur anschließt und andererseits an eine Unterseite einer aufrechten Spur.

14. Anbringungssystem nach einem der vorstehenden Ansprüche, wobei der Trägerholm (4) ferner eine dritte Schiene aufweist, die oberhalb der mindestens zwei Schienen (7, 8) platziert ist und die mit einer Nut (20) versehen ist.

15. Anbringungssystem nach einem der vorstehenden Ansprüche derart, dass die zumindest zwei Schienen auf ein und derselben Seite der Ebene der Plane (3) und in einem Abstand davon angeordnet sind, wenn die Plane von dem Wagen (6) herabhängt.

## Revendications

1. Système destiné à fixer une bâche (3) dans le but de fermer un côté d'un espace de chargement (1), lequel système de suspension comprend une poutre de support (4) qui est dotée d'au moins deux rails (7, 8) qui sont sensiblement parallèles l'un par rapport à l'autre mis et qui s'étendent dans une direction longitudinale, le système comprenant des chariots (6) prévus pour y fixer ladite bâche (3), lesquelles chariots sont chacun dotés en outre d'un ensemble de roues qui sont toutes placées de façon à rouler dans ladite direction longitudinale et dans les au moins deux rails (7, 8), **caractérisé en ce qu'**un premier sous-ensemble comprend trois roues (11, 12, 13) qui sont placées de façon à rouler autour d'axes parallèles qui s'étendent dans une première direction, dans lequel un second sous-ensemble comprend deux roues (9, 10) qui sont placées de façon à rouler autour d'axes parallèles qui s'étendent dans une seconde direction qui fait un angle par rapport à la première direction, dans lequel les roues du second sous-ensemble sont placées de telle sorte que la distance entre les axes des deux roues dans la direction longitudinale soit supérieure au diamètre moyen des deux roues (9, 10), dans lequel les roues du premier sous-ensemble sont placées de telle sorte que deux roues du premier sous-ensemble présentent une distance entre leurs axes dans la direction longitudinale qui est supérieure à leur diamètre moyen, et dans lequel une troisième roue du premier sous-ensemble de roues est placée à une distance dans ladite première direction à partir de l'une au moins desdites deux roues du premier sous-ensemble, dans lequel lesdites roues du second sous-ensemble et ladite troisième roue du premier sous-ensemble sont disposées de façon à rouler dans un premier des deux rails (7, 8), et lesdites deux roues du premier sous-ensemble sont disposées de façon à rouler dans un deuxième des deux rails (7, 8).

2. Système de fixation selon la revendication 1, dans lequel les deux rails (7, 8) au moins comprennent des chemins de roulement (14, 15, 16, 17, 18, 19) sur lesquels les roues peuvent rouler.

3. Système de fixation selon la revendication 2, dans lequel les chemins de roulement sont formés en paires placées à l'opposé avec une distance intermédiaire qui est supérieure au diamètre des roues associées de telle sorte que chaque roue puisse rouler entre deux chemins de roulement.

4. Système de fixation selon l'une quelconque des revendications précédentes, dans lequel ledit angle est approximativement égal à 90 degrés.

5. Système de fixation selon l'une quelconque des revendications précédentes, dans lequel ladite troisième roue (13) du premier sous-ensemble est placée entre les deux roues (9, 10) du second sous-ensemble.

6. Système de fixation selon l'une quelconque des revendications précédentes, dans lequel ladite première direction est sensiblement horizontale ou verticale.

7. Système de fixation selon la revendication 6, dans lequel ladite première direction est sensiblement verticale.

8. Système de fixation selon l'une quelconque des revendications précédentes, dans lequel chacun des deux rails (7, 8) présente une ouverture dans la direction longitudinale adjacente au point le plus bas du rail.

9. Système de fixation selon les revendications 2 ou 3 et la revendication 8, dans lequel ladite ouverture est adjacente au chemin de roulement qui se situe le plus bas dans le rail.

10. Système de fixation selon l'une quelconque des revendications précédentes, dans lequel les au moins deux rails (7, 8) sont placés l'un au-dessus de l'autre.

11. Système de fixation selon les revendications 4 et 19, dans lequel ledit premier des deux rails (7, 8) est placé au-dessus du deuxième des deux rails.

12. Système de fixation selon la revendication 11, dans lequel le deuxième des deux rails (7, 8) présente une section transversale en forme de U renversé.

13. Système de fixation selon les revendications 11 ou 12 et les revendications 2 ou 3, dans lequel le premier rail définit une cavité rectangulaire dotée d'une ouverture qui est contiguë d'une part au chemin de roulement qui se trouve le plus bas, et qui est contiguë d'autre part au dessous d'un chemin de roulement droit.

14. Système de fixation selon l'une quelconque des revendications précédentes, dans lequel la poutre de support (4) comprend en outre un troisième rail qui est placé au-dessus des au moins deux rails (7, 8) et qui est doté d'une rainure (20).

15. Système de fixation selon l'une quelconque des revendications précédentes, dans lequel les au moins deux rails se situent d'un même côté du plan de la bâche (3) et à une distance de celui-ci lorsque la bâche est suspendue à partir des chariots (6).
